# EUROPEAN PATENT SPECIFICATION

(11) **EP 0 827 349 B1**
(45) Date of publication and mention of the grant of the patent: **05.02.2003**
(21) Application number: 97306567.5
(22) Date of filing: 27.08.1997
(51) Int. Cl.: H04N 13/00, H04N 5/222, H04N 5/232, H04N 5/268

(54) **Multidirectional image pickup apparatus using a plurality of 3D-cameras**
Multidirektionale Bildaufnahmevorrichtung mit mehreren 3D-Kameras
Capteur d'images multidirectionnel utilisant plusieurs caméras 3D

(30) Priority: 27.08.1996 JP 22505596
(43) Date of publication of application: 04.03.1998
(73) Proprietor: Murakami, Kanji, Shibuya-ku, Tokyo (JP)
(72) Inventor: Murakami, Kanji, Shibuya-ku, Tokyo (JP)
(74) Representative: Brown, Kenneth Richard

(56) References cited:
- EP-A- 0 472 015
- EP-A- 0 564 885
- EP-A- 0 737 005
- WO-A-93/06690
- DE-A- 4 135 385
- DE-B- 2 706 238
- US-A- 4 566 036
- US-A- 5 164 827
- US-A- 5 396 287

## Description

The present invention relates to a multidirectional image pickup apparatus using a plurality of image pickup cameras including a technique of picking up the image of an object in, e.g., a stadium from multangular directions using
three-dimensional stereoscopic camera units for obtaining a stereoscopic image, or stereoscopic VTRs for recording a stereoscopic image.

In, e.g., a TV studio, a plurality of TV cameras are set to surround performers in the studio, so that the performers are simultaneously photographed with the plurality of TV cameras from a plurality of directions. Normally, two-dimensional cameras are used as the TV cameras. One of image signals obtained from the plurality of cameras is selected by a switcher and output as a signal for broadcasting. When one of the plurality of image signals is selected, the following facts are founded.

When the first and second cameras are picking up different objects, and the first camera output selected state is changed to the second camera output selected state, i.e., a so-called scene change is made, not so large incongruence is sensed even when the zoom-up ratios of the two cameras are different.

However, the following case sometimes generates the sense of incongruence. Assume that the first and second cameras are used to pick up one object from different angular directions, and the zoom-up ratio as one of image pickup conditions for the first camera is different from that as one of image pickup conditions for the second camera. When the first camera output selected state is changed to the second camera output selected state under such image pickup conditions, the size of the object abruptly changes on the display although the angles of view point, i.e., the photographing angles of the first and second cameras with respect to the object are different. This results in unnaturalness to make viewers to sense incongruence.

For this reason, the director of a TV program uses a specific technique. In this technique, the same image pickup condition (zoom-up ratio) is set for the first and second cameras, the first camera output selected state is switched to the second camera output selected state under this circumstance, and thereafter, the zoom-up ratio as an image pickup condition for the second camera is changed, thereby providing a natural effect to the viewers.

Particularly, assume that a plurality of three-dimensional camera units for obtaining a stereoscopic image are used to take a football or baseball game, and a zoomed image of a player is taken with the first camera set in the first direction and output. When the image is switched to an image photographed with the second camera set in the second direction, the image of the player taken from the first direction changes, on the display, to the image taken from the second direction. In this case, when the display screen changes from the first camera image to the second camera image, it is important that the displayed image of the object, i.e., the player do not change in size.

When the same object is being picked up from different angular directions, and the first camera output selected state is to be switched to the second camera output selected state, the director issues instructions of zoom-up ratios and the like to the first and second camera operators via a radio or cable system. In response to the instruction, each of the first and second camera operators operates the zooming mechanism of the camera to control the zoom-up ratio such that the images of the object, which are picked up with the first and second cameras, are displayed in the same size on the display. While the sizes of the two picked up images are equal, the switcher changes the first camera output selected state to the second camera output selected state.

However, according to this technique, a relatively long time is required after the director issues instructions to the camera operators until appropriate image pickup conditions corresponding to the instructions are set by the respective operators. Especially, assume that, in a wide stadium or the like, not the first and second cameras set at two positions but a number of cameras arranged at various positions to surround the field are used for photographing, and operators are assigned to the respective cameras. In this case, when instructions are issued to the operators, a much longer time is necessary until the respective camera operate as intended.

In the above description, the plurality of cameras to be set are two-dimensional cameras which can be easily operated. Assume use of three-dimensional cameras (stereoscopic cameras). In this case, the zoom-up ratio of each three-dimensional camera must be adjusted. In addition, the cross angle of the optical axes of right and left cameras must be simultaneously adjusted to obtain an appropriate stereoscopic effect for expressing the perspective. More specifically, the senses of distance to the object are made to coincide with each other. When such three-dimensional cameras are used, the operation of each camera is complex. When the director issues instructions to the respective camera operators, a long time is required until the camera operators operate their cameras as instructed. Especially when stereoscopic cameras are arranged at a number of positions, operators are assigned to the respective stereoscopic cameras, and instructions about image pickup conditions are issued, a long time is necessary until the respective stereoscopic cameras operate as intended.

US-A-5164827 discloses a camera surveillance system composed of a plurality of image pickup two-dimensional cameras. A master adjustable camera selects a position in a premises and transmits information related to the selected position to a slave adjustable camera. The slave camera adjusts its operating control parameters in accordance with this information so as automatically to view the same position.

EP-A-0472015 discloses a stereoscopic (three-dimensional) pickup device having two camera bodies mounted on a support plate with an adjustable separation (interval) therebetween.

The present invention aims to provide a multidirectional image pickup apparatus using a plurality of three-dimensional image pickup cameras capable of integrally and easily controlling image pickup conditions for the plurality of cameras while an object is being photographed from different angular directions.

According to the present invention, there is provided a multidirectional image pickup apparatus using a plurality of image pickup cameras, comprising: image pickup main condition data acquisition means for acquiring image pickup main condition data representing an image pickup condition for a main camera; and image pickup sub-condition generating means for outputting image pickup sub-condition data for a sub-camera and supplying the image pickup sub-condition data to said sub-camera to set an image pickup condition for said sub-camera, in correspondence with the image pickup condition for the main camera, characterized in that said image pickup sub-condition generating means comprises a memory means for prestoring said image pickup sub-condition data for correspondence with a plurality of different settings of said image pickup condition for the main camera, said pre-stored image pickup sub-condition data being readable from said memory on the basis of read addresses supplied thereto, the apparatus includes address generation means for generating a said read address on the basis of the image pickup main condition data from said image pickup main condition data acquisition means, and an operation section operable in a data preparation and pre-storing operation to control the memory means and the address generation means so as to write into said memory means acquired image pickup sub-condition data which is used in said operation to control the sub-camera, and which corresponds to each of said plurality of settings of said image pickup condition for the main camera, as used in said operation to set the main camera, the write addresses therefor being generated by said address generation means on the basis of the image pickup main condition data; and each of said main camera and said sub-camera is a three-dimensional camera and comprises: right and left two-dimensional cameras arranged at a predetermined camera interval; zooming control means for controlling a zoom-up ratio of each of said right and left two-dimensional cameras; camera interval control means for controlling the camera interval to adjust a cross position of optical axes of said right and left two-dimensional cameras along a front-and rear direction, said camera interval control means having a data converting ROM which is exchangeable as needed, and converting control data to an interval control data for controlling said camera interval, and data associating means for supplying said control data to said camera interval control means in accordance with adjustment by said zooming control means.

The image pickup main condition data and the image pickup sub-condition data preferably comprise data representing the zoom-up ratios set for said main camera and said sub-camera, respectively, and directions of said cameras. In addition, at least data associated with the cross angle of the optical axes of the right and left cameras for obtaining a stereoscopic image with the three-dimensional camera is included.

According to the image pickup apparatus having this arrangement, when in the data preparation and prestoring operation a specific area in, e.g. a stadium is being taken with the plurality of cameras, the image pickup condition for the main camera is read out, and a corresponding image pickup condition for the sub-camera is obtained and written and recorded in the memory. Then, while a specific player is being photographed with the main camera, the image pickup condition for the second camera in correspondence with the image pickup condition for the main camera which is photographing the object is read out from the memory, and the data of the image pickup condition is supplied to the sub-camera. More specifically, the operator need not operate and set the image pickup condition for the sub-camera on the basis of an instruction from the director, and the image pickup condition for the sub-camera is set in correspondence with that for the main camera. Therefore, the image of the main camera can be smoothly switched to the image of the sub-camera.

The invention can be more fully understood from the following detailed description when taken in conjunction with the accompanying drawings, in which:
FIG. 1 is a view for explaining the basic state of an embodiment of the present invention;
FIG. 2 is a view for explaining an example of control data acquisition in the embodiment;
FIG. 3 is a flow chart for explaining the flow of the operation of the apparatus;
FIG. 4 is a perspective view showing the outer appearance of a three-dimensional camera used in the embodiment;
FIG. 5 is a block diagram showing the internal arrangement of the three-dimensional camera according to the present invention;
FIGS. 6A, 6B and 6C are views for explaining techniques of obtaining a stereoscopic image;
FIG. 7 is a view for explaining a technique of photographing a stereoscopic image with cameras set at positions separated from an object by different distances;
FIG. 8A is a block diagram showing the arrangement of a control unit for causing a camera to pick up a stereoscopic image; and
FIG. 8B is a graph for explaining the relationship between the camera interval and the zoom ratio so as to explain the representation effect.

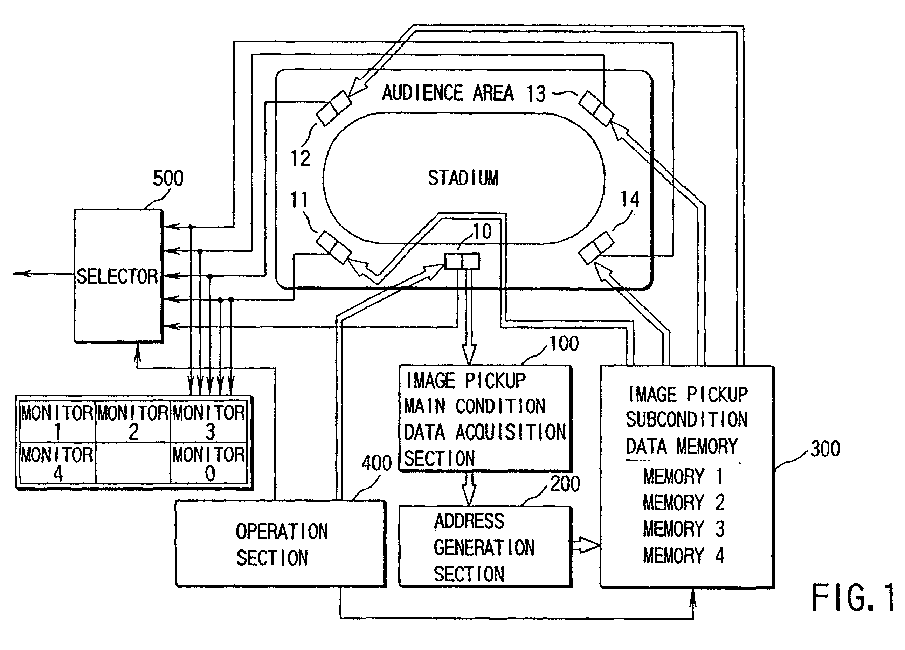

The present invention will be described with reference to the accompanying drawing. FIG. 1 is a view for explaining the basic arrangement of an image pickup site. FIG. 1 shows an image pickup system for TV relay broadcasting in a stadium where a ball game such as football is being played. A plurality of TV cameras are arranged around the stadium. In this embodiment, three-dimensional cameras for expressing a stereoscopic image are used.

A three-dimensional main camera unit 10 is set in the main stand of the stadium. Additionally, three-dimensional subcamera units 11 to 14 are arranged. More specifically, the three-dimensional main camera unit 10 is arranged in an audience area opposing the front of the stadium, and the three-dimensional subcamera units 11 to 14 are arranged in audience areas close to the four corners of the stadium.

In relay broadcasting of a game which is being played in a stadium, the three-dimensional main camera unit 10 is directed to an object, i.e., a specific player in a specific image pickup area by the operator on the basis of an instruction from the director, so that predetermined image pickup conditions including a zoom-up ratio are set. Image pickup main condition data representing the image pickup conditions is input to an image pickup main condition data acquisition section 100. The image pickup condition data includes data D11 associated with the cross angle of the optical axes of a pair of right and left cameras constituting the three-dimensional camera unit, data D12 associated with the zoom-up state, and data D13 associated with the camera angle. These data D11 to D13 are supplied to an address generation section 200.

The address generation section 200 is constituted by a ROM or a RAM and outputs addresses A11, A12, and A13 corresponding to the data D11, D12, and D13, respectively. When the values of the data D11 to D13 change beyond a certain allowance, the values of the addresses A11 to A13 corresponding to these data also change.

The addresses A11 to A13 are supplied to an image pickup subcondition data memory 300 and function as read addresses (e.g., upper addresses). The image pickup subcondition data memory 300 stores, as subcondition data, image pickup condition data of each three-dimensional subcamera unit in correspondence with the image pickup main condition data in advance. Therefore, the addresses A11 to A13 are supplied to the image pickup subcondition data memory 300. When a lower address (e.g., a clock count value) is received from an operation section 400, image pickup subcondition data for the three-dimensional subcamera units 11 to 14 are simultaneously obtained. These image pickup condition data are simultaneously supplied to the corresponding three-dimensional subcamera units 11 to 14.

The image pickup conditions for the three-dimensional subcamera units 11 to 14 are automatically set to optimum image pickup conditions in correspondence with the image pickup conditions for the three-dimensional main camera unit 10. The image pickup conditions for the three-dimensional main camera unit 10 are set by a remote operation or by the operator through the operation section 400. Image pickup outputs from the camera units 10 to 14 are supplied to monitors 0 to 4, respectively, and monitored by the operator. Each of monitors 0 to 4 can selectively display the image pickup output from one of the pair of cameras constituting the corresponding three-dimensional camera unit. The image pickup outputs from the camera units 10 to 14 are input to a selector 500. The output from one of the three-dimensional camera units is selected and output upon an operation by the operator.

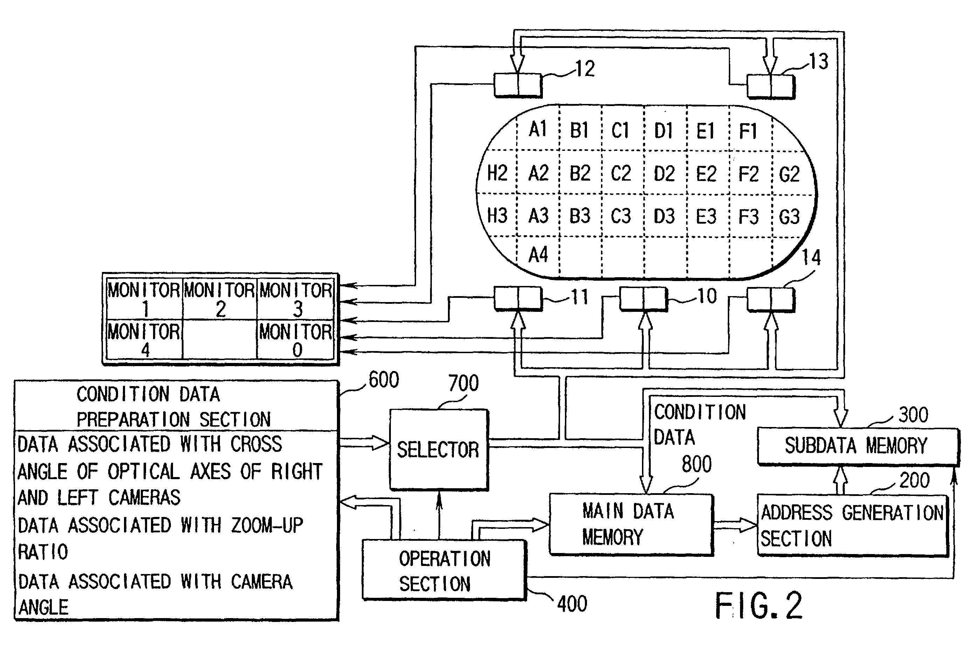

FIG. 2 shows a data preparation system for the address generation section 200 and the image pickup subcondition data memory 300 of the three-dimensional subcamera unit. When the number of cameras to be used in the stadium and their setting positions are determined, the stadium is virtually divided into a plurality of areas in advance. A mark such as a numbered flag is set in each area. Next, the image pickup signals from the camera units 10 to 14 are monitored on monitors 0 to 4.

First, the operation section 400 is operated to cause a condition data preparation section 600 to adjust control data. The control data is supplied first to the three-dimensional main camera unit 10 through a selector 700. The control data includes data for controlling the pan and tilt of the camera unit 10, data associated with the zoom-up ratio, and data associated with front-and-rear direction adjustment of the cross point where the optical axes of the pair of right and left cameras cross each other. These data are supplied to the three-dimensional main camera unit 10 first.

In this system, when the data associated with the zoom-up ratio is controlled as will be described later, the data (mainly, interval control data for the right and left cameras) associated with the cross point of the pair of optical axes of the three-dimensional camera unit is automatically read out from the ROM storing the data in advance in correspondence with the zoom-up ratio and used.

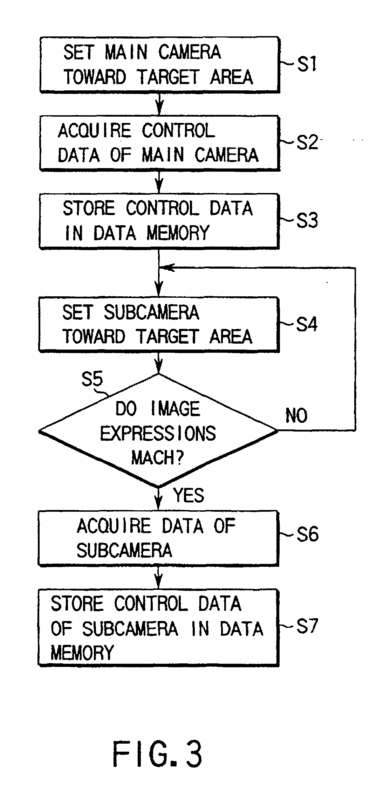

The operation procedure will be described with reference to FIG. 3. The operator directs the three-dimensional main camera unit 10 to a desired area while observing monitor 0 and performs various adjustment operations in step S1. Upon completion of setting of the three-dimensional main camera unit 10, the control data of the three-dimensional main camera unit 10 is acquired as shown in step S2 and supplied to a main data memory 800 in response to the operation of the operation section 400 in step S3. The data is recorded in the main data memory 800, and accordingly, a first clock is supplied to the address generation section 200. Upon receiving the clock, the address generation section 200 generates the first address on, e.g., the upper bit side to designate the write address of the data memory 300.

When setting of the three-dimensional main camera unit 10 is complete, the three-dimensional subcamera units 11 to 14 are individually adjusted. When the three-dimensional subcamera unit 11 is to be adjusted, the three-dimensional subcamera unit 11 as the second camera is directed to the desired area in step S4. The selector 700 is controlled through the operation section 400 such that the control data is supplied to the three-dimensional subcamera unit 11. Control data of the condition data preparation section 600 is adjusted through the operation section 400. The operator compares the content of monitor 0 with that of monitor 1 (in step S5). If the zoom-up ratios of both monitors almost equal, i.e., if almost the same stereoscopic effects are obtained although the angles are different, the operator operates the operation section 400 to acquire control data at that time in step S6, thereby performing control to write the control data in the data memory 300 in step S7. At this time, an address on the lower bit side is supplied to the data memory 300.

In adjustment of the three-dimensional subcamera unit 12 as well, the selector 700 is controlled through the operation section 400 such that the control data is supplied to the three-dimensional subcamera unit 12. The control data of the condition data preparation section 600 is adjusted through the operation section 400. The operator compares with the content of monitor 0 with that of monitor 2. If the zoom-up ratios of both monitors almost equal (if almost the same stereoscopic effects are obtained upon switching the camera), the operator operates the operation section 400, thereby performing control to write the control data at that time in the subdata memory 300.

In this way, the image pickup condition data for the respective cameras are sequentially prepared such that the image pickup state of each of the three-dimensional subcamera units 11 to 14 matches that of three-dimensional main camera unit 10 aiming at the first area, and the image pickup condition data are stored in the memory 300. When the image pickup condition data for the respective camera units for the first area are prepared, the three-dimensional main camera unit 10 is directed to the second area. As in the first area, image pickup condition data for the respective camera units are prepared.

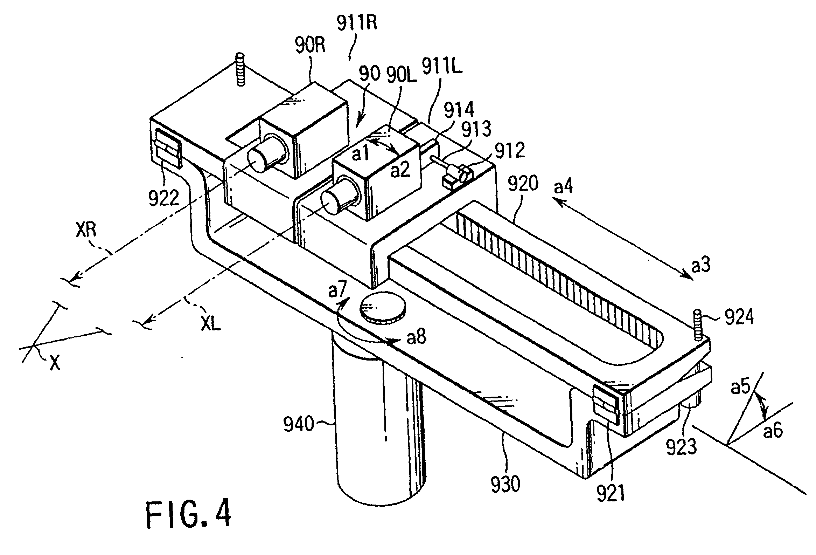

The arrangement of the three-dimensional camera unit will be described next. As shown in FIG. 4, a pair of left and right cameras 90L and 90R are juxtaposed at a predetermined interval to constitute a three-dimensional camera 90. The cameras 90L and 90R are attached at their front lower portions to first and second supporting plates 911L and 911R, respectively, with pins (not shown) while being separated from each other at a predetermined interval. The front portion of, e.g., the left camera 90L is attached to the supporting plate 911L with a pin (not shown), and the rear portion of the camera 90L can be horizontally rotated about the pin by a motor 912. The motor 912 adjusts the cross angle of the optical axes. When the motor 912 is rotation-controlled, the left camera 90L can pivot in a direction indicated by an arrow a1 or a2. With this arrangement, a cross position X of optical axes XL and XR of the left and right cameras 90L and 90R can be moved along the front-and-rear direction.

The motor 912 is attached to the upper surface of the first supporting plate 911L. A rotating shaft 913 of the motor 912 threadably engages with a bearing 914 provided at the rear end portion of the camera 90L. As a result, the cross position X of the optical axes XL and XR of the left and right cameras 90L and 90R can be moved along the front-and-rear direction by controlling the motor 912.

If adjustment of the motor 912 is insufficient, i.e., when the cross position X is to be moved to a distant position, the first supporting plate 911L is moved on a rail plate 920 in a direction indicated by an arrow 3a in FIG. 4. More specifically, the supporting plate 911L is attached to be movable on the rail plate 920 in a direction indicated by the arrow a3 or a4. This movement control is realized by controlling a motor (not shown).

The rail plate 920 is supported on a rotating plate 930 with an interval therefrom. The rail plate 920 is attached at its front end portion to the two end portions of the edge of the rotating plate 930 with hinges 921 and 922. With this structure, the rail plate 920 can pivot at the fulcrums of the hinges 921 and 922 in a direction indicated by an arrow a5 or a6. The pivotal movement in the direction indicated by the arrow a5 or a6 is controlled by a motor 923. More specifically, the motor 923 is attached to the lower surface of the rotating plate 930. A rotating shaft 924 of the motor 923 is received by the bearing in the rail plate 920.

The rotating plate 930 is attached almost at its central portion to the base 940 to be horizontally rotatable. Rotation in a direction indicated by an arrow a7 or a8 can be set by a motor (not shown).

With this arrangement, the pan and tilt of the stereoscopic camera unit can be controlled. In addition, the camera interval for obtaining a stereoscopic effect can be freely adjusted and controlled.

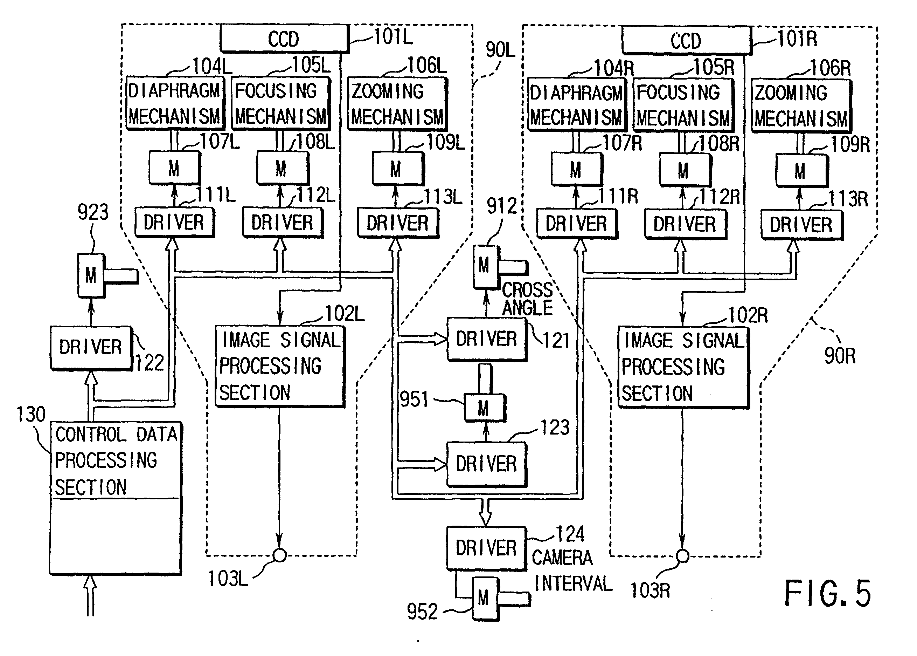

FIG. 5 shows the internal arrangement of the left and right cameras 90L and 90R and, more particularly, a portion associated with the present invention. The left and right cameras have the same structure, and only one (camera 90L) of them will be described. The image pickup signal from an image pickup device (CCD) 101L is processed by an image signal processing section 102L, converted into a video signal according to a predetermined standard, and output to an output terminal 103L. The camera incorporates a diaphragm (iris) mechanism 104L, a focusing mechanism 105L, and a zooming mechanism 106L, which are driven and adjusted by motors 107L, 108L, and 109L, respectively. Driving signals to the motors 107L, 108L, and 109L are supplied from drivers 111L, 112L, and 113L, respectively.

The above-described motor 912 for adjusting the cross angle of the optical axes is driven by a motor driver 121. The motor 923 for adjusting the tilt is driven by a driver 122. A motor 951 is driven by a driver 123 to change the direction of the camera. A motor 952 is driven by a driver 124 to change the camera interval.

The drivers 111L to 113L, 111R to 113R, 121, 122, 123, and 124 receive corresponding data from a control data processing section 130. Actually, the control data processing section 130 incorporates a microprocessor and assigns addresses to the respective drivers. The drivers receive corresponding data under the control of the microprocessor.

In the operation described in FIG. 1, the control data processing section 130 receives corresponding control data from the image pickup subcondition data memory 300 and supplies the control data to a corresponding driver. In the operation described in FIG. 2, the control data processing section 130 receives control data from the selector 700 and supplies the control data to a corresponding driver.

According to this camera system, image pickup conditions for a plurality of cameras can be integrally and easily controlled. In addition, the image pickup conditions for the plurality of cameras can be integrally acquired. Consequently, an operator can easily obtain photographing information from multiangular directions.

In setting control data shown in FIG. 2, the image pickup conditions for the second camera unit in correspondence with the first camera unit can be freely selected and set in accordance with the experience or sense of the operator as a camera operator.

The stereoscopic effect obtained in use of the three-dimensional camera unit will be described next.

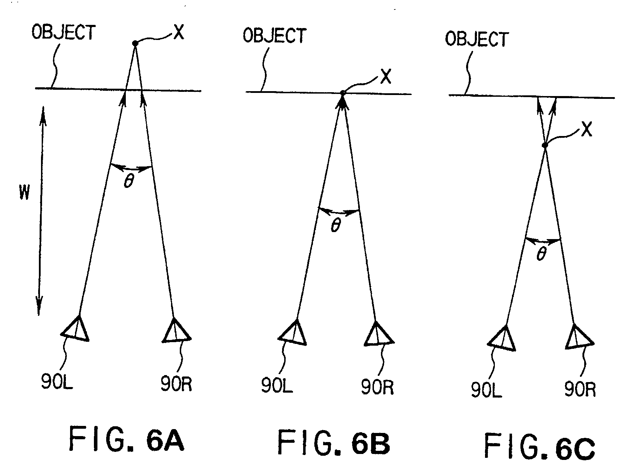

As shown in FIG. 6A, when the cameras are focused on the object at a cross angle θ, and the cross point X is set beyond the object, the stereoscopic pickup image appears to pop from the screen. The screen is assumed to be separated by a distance equal to a distance W between the camera and the object during the photographing operation. As shown in FIG. 6B, when the cameras are focused on the object at the cross angle θ, and the cross point X is set on the object, the stereoscopic image is formed on the screen. As shown in FIG. 6C, when the cameras are focused on the object at the cross angle θ, and the cross point X is set on the operator appears to recede from the object, the stereoscopic image is formed beyond the screen.

According to this technique, a selection as to whether the image is formed receding from the screen, on the screen, or popping from the screen is appropriately made, and image pickup environment data for the respective cameras are prepared, as described in FIG. 2. These data are set to suit the taste of the producer.

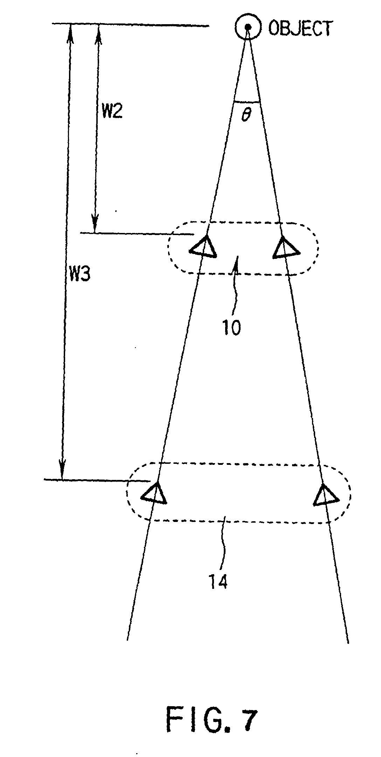

FIG. 7 shows the relationship between stereoscopic cameras whose distances to the object are different. The stereoscopic camera unit 10 is separated from the object by a distance W2. The stereoscopic camera unit 14 is separated from the object by a distance W3. Assume that the image picked up with the stereoscopic camera unit 10 is switched to that picked up with the stereoscopic camera unit 14. To equalize the stereoscopic effects of the images of the camera units 10 and 14, both cameras are focused on the object at the same cross angle θ, and zooming is performed.

Even when the distances from the object are different, almost the same stereoscopic effects can be obtained with the stereoscopic cameras by maintaining the same cross angle θ and performing zooming. In this case, the camera interval of the stereoscopic camera 10 is different from that of the stereoscopic camera 14. The camera interval of the stereoscopic camera 14 is larger than that of the stereoscopic camera 10. The camera interval is controlled in the manner described in FIGS. 4 and 5. In this case, the stereoscopic camera units 10 and 14 are focused on the object.

When the two cameras are focused on the object using the same cross angle, and zooming is performed, the stereoscopic camera unit 14 picks up the image of the object as if it were moved to the position of the stereoscopic camera unit 10, although the image pickup direction with respect to the object is different.

For the image pickup condition data described in FIGS. 1 and 2 as well, the camera interval or zoom ratio of each camera unit is controlled in consideration of the above condition. With this arrangement, the same stereoscopic image pickup effect can be obtained with the respective camera units upon switching the camera unit.

As described above in FIG. 7, there is a close relationship between the distance from the camera unit to the object and the interval of the right and left cameras. The distance between the camera unit and the object is proportional to the zoom ratio. In this system, when zooming is adjusted, zooming adjustment data is automatically converted into camera interval control data.

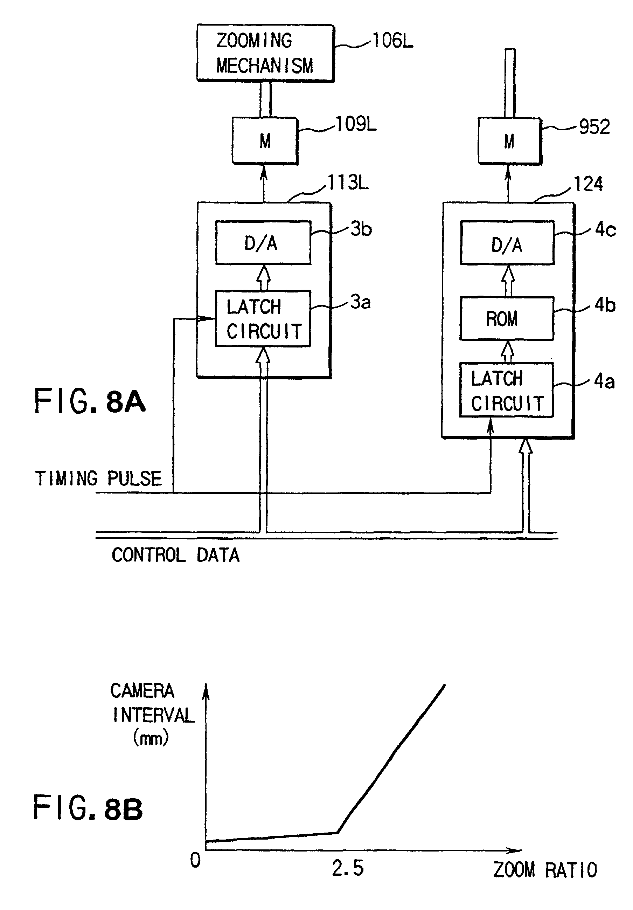

FIG. 8A shows a circuit block (zooming control means) for zooming adjustment, and a circuit block (camera interval control means) for camera interval adjustment. The driver 113L for zooming adjustment comprises a control data latch circuit 3a and a D/A converter 3b for converting the output from the latch circuit 3a into an analog current. Control data for zooming adjustment is also latched by a latch circuit 4a of the driver 124 via a bus as an associated means. The latched data is set in advance by a professional cameraman and supplied to a data converting ROM 4b. The output from the ROM 4b is supplied to a D/A converter 4c which converts the output into an analog current. This current is used as a current for controlling the motor interval. FIG. 8B shows the relationship between the zoom-up ratio by the zooming control means and the camera interval by the camera interval control means. This relationship can be set by the.data converting ROM 4b.

FIG. 8A shows the basic arrangement. Actually, a forward/reverse rotation switching signal is supplied. In addition, to obtain a rotation angle corresponding to the latched control data, a feedback controller, a comparator, and the like are arranged.

For the relationship between the zoom ratio and the camera interval, even when the zoom ratio slightly changes, the camera interval hardly changes. However, when the zoom ratio increases to 2.5x or more, the camera interval largely linearly changes at a ratio of 1:1. Although this slope of the curve is not uniquely determined because it involves presentation effects intended by professional cameramen, the characteristic is stored in the ROM in correspondence with the lens characteristics of the camera to be used or performance of the camera. Various presentation effects of the stereoscopic image can be set according to this change curve. The ROM can be exchanged as needed. For example, the ROM may be exchanged in accordance with presentation in a football playfield or presentation in a car race circuit. Alternatively, the ROM may be exchanged according to the taste of an individual person.

## Claims

1. A multidirectional image pickup apparatus using a plurality of image pickup cameras, comprising:
image pickup main condition data acquisition means (100) for acquiring image pickup main condition data representing an image pickup condition for a main camera (10); and
image pickup sub-condition generating means (300) for outputting image pickup sub-condition data for a sub-camera (11-14) and supplying the image pickup sub-condition data to said sub-camera to set an image pickup condition for said sub-camera, in correspondence with the image pickup condition for the main camera,
**characterized in that**
said image pickup sub-condition generating means (300) comprises a memory means for pre-storing said image pickup sub-condition data for correspondence with a plurality of different settings of said image pickup condition for the main camera, said pre-stored image pickup sub-condition data being readable from said memory on the basis of read addresses supplied thereto,
the apparatus includes address generation means (200) for generating a said read address on the basis of the image pickup main condition data from said image pickup main condition data acquisition means, and an operation section (400) operable in a data preparation and pre-storing operation to control the memory means and the address generation means (200) so as to write into said memory means acquired image pickup sub-condition data which is used in said operation to control the sub-camera, and which corresponds to each of said plurality of settings of said image pickup condition for the main camera, as used in said operation to set the main camera, the write addresses therefor being generated by said address generation means (200) on the basis of the image pickup main condition data; and
each of said main camera (10) and said sub-camera (11-14) is a three-dimensional camera and comprises:
right and left two-dimensional cameras (90R, 90L) arranged at a predetermined camera interval;
zooming control means (106R, 106L) for controlling a zoom-up ratio of each of said right and left two-dimensional cameras;
camera interval control means (124, 952) for controlling the camera interval to adjust a cross position of optical axes of said right and left two-dimensional cameras along a front-and rear direction, said camera interval control means having a data converting ROM (4b) which is exchangeable as needed, and converting control data to an interval control data for controlling said camera interval, and
data associating means (130) for supplying said control data to said camera interval control means in accordance with adjustment by said zooming control means.

2. An apparatus according to claim 1, **characterized in that** the image pickup main condition data and the image pickup sub-condition data comprise data representing zoom-up ratios set for said main camera (10) and said sub-camera (11-14), respectively, and directions of said cameras.

3. An apparatus according to claim 1, **characterized in that** each of said image pickup main condition data and said image pickup subcondition data includes at least data associated with zooming and data associated with a cross angle of optical axes of said right and left cameras for obtaining a stereoscopic image with said three-dimensional camera.

4. An apparatus according to claim 1, **characterized in that** said camera interval control means (124, 952) has characteristics representing that a slope representing camera interval changing characteristics is small before the zoom-up ratio is set at a predetermined value by said zooming control means, and the slope increases when the zoom-up ratio exceeds the predetermined angle.

5. An apparatus according to claim 1, **characterized in that** each of said three-dimensional main camera unit and said three-dimensional sub-camera comprises camera direction control means for adjusting a pan of each of said right and left two-dimensional cameras and a tilt control means for adjusting a tilt of each of said right and left two-dimensional cameras.

## Patentansprüche

1. Multidirektionale Bildaufnahmevorrichtung, welche eine Mehrzahl von Bildaufnahmekameras verwendet, mit:
einer Bildaufnahme-Hauptbedingungsdatenerfassungseinrichtung (100) zum Erfassen von Bildaufnahme-Hauptbedingungsdaten, welche eine Bildaufnahmebedingung für eine Hauptkamera (10) darstellen; und
einer Bildaufnahme-Unterbedingungerzeugungseinrichtung (300) zum Ausgeben von Bildaufnahme-Unterbedingungsdaten an eine Unterkamera (11 - 14) und Liefern der Bildaufnahme-Unterbedingungsdaten zu der Unterkamera, um, in Übereinstimmung mit der Bildaufnahmebedingung für die Hauptkamera, eine Bildaufnahmebedingung für die Unterkamera festzulegen,
**dadurch gekennzeichnet, dass**
die Bildaufnahme-Unterbedingungerzeugungseinrichtung (300) eine Speichereinrichtung zum Vorspeichern der Bildaufnahme-Unterbedingungsdaten für eine Übereinstimmung mit einer Mehrzahl von unterschiedlichen Einstellungen der Bildaufnahmebedingung für die Hauptkamera aufweist, wobei die vorgespeicherten Bildaufnahme-Unterbedingungsdaten auf der Basis von Leseadressen aus dem Speicher lesbar sind,
die Vorrichtung eine Adressenerzeugungseinrichtung (200) zum Erzeugen einer Leseadresse auf der Basis der Bildaufnahme-Hauptbedingungsdaten von der Biidaufnahme-Hauptbedingungsdatenerfassungseinrichtung und einen Betriebsteil (400) aufweist, welcher in einer Datenaufbereitungs- und Vorspeicherfunktion verwendbar ist, um die Speichereinrichtung und die Adressenerzeugungseinrichtung (200) so zu steuern, dass sie erfasste Bildaufnahme-Unterbedingungsdaten, welche in der Funktion zum Steuern der Unterkamera verwendet werden, in die Speichereinrichtung schreibt, und welche jeder der Mehrzahl von Einstellungen der Bildaufnahmebedingung für die Hauptkamera entsprechen, wie sie in der Funktion verwendet werden, um die Hauptkamera einzustellen, wobei die Schreibadressen deswegen von der Adressenerzeugungeinrichtung (200) auf der Basis der Bildaufnahme-Hauptbedingungsdaten erzeugt werden; und
jede der Hauptkamera (10) und Unterkamera (11 - 14) eine dreidimensionale Kamera ist und folgendes aufweist:
rechte und linke zweidimensionale Kameras (90R, 90L), welche in einem vorgegebenen Kameraabstand angeordnet sind;
eine Zoomsteuereinrichtung (106R, 106L) zum Steuern eines Zoomverhältnisses von jeder der rechten und linken zweidimensionalen Kameras;
eine Kameraabstands-Steuereinrichtung (124, 952) zum Steuern des Kameraabstands, um eine Kreuzungsposition von optischen Achsen der rechten und linken zweidimensionalen Kameras entlang einer Vorwärts- und Rückwärtsrichtung einzustellen, wobei die Kameraabstands-Steuereinrichtung ein Datenumwandlungs-ROM (4b) besitzt, welches, falls nötig, austauschbar ist, und Steuerdaten in Abstandssteuerdaten umwandelt, um den Kameraabstand zu steuern, und
eine Datenzuordnungseinrichtung (130) zum Liefern der Steuerdaten zu der Kameraabstands-Steuereinrichtung entsprechend einer Einstellung von der Zoomsteuereinrichtung.

2. Vorrichtung nach Anspruch 1, **dadurch gekennzeichnet, dass** die Bildaufnahme-Hauptbedingungsdaten und die Bildaufnahme-Unterbedingungsdaten Daten aufweisen, welche eine Zoomverhältniseinstellung für die Hauptkamera (10) bzw. die Unterkamera (11- 14) und die Richtungen der Kameras darstellen.

3. Vorrichtung nach Anspruch 1, **dadurch gekennzeichnet, dass** alle Bildaufnahme-Hauptbedingungsdaten und alle Bildaufnahme-Unterbedingungsdaten mindestens Daten aufweisen, welche mit einem Zoomen zusammenhängen, und Daten aufweisen, welche mit einem Kreuzungswinkel von optischen Achsen der rechten und linken Kameras zusammenhängen, um mit der dreidimensionalen Kamera ein stereoskopisches Bild zu erhalten.

4. Vorrichtung nach Anspruch 1, **dadurch gekennzeichnet, dass** die Kameraabstands-Steuereinrichtung (124, 952) eine Charakteristik besitzt, welche darstellt, dass eine Neigung, die Kameraabstands-Änderungsmerkmale darstellt, klein ist, bevor das Zoomverhältnis von der Zoomsteuereinrichtung auf einen vorgegebenen Wert eingestellt wird; und die Neigung verstärkt wird, wenn das Zoomverhältnis den vorgegebenen Winkel übersteigt.

5. Vorrichtung nach Anspruch 1, **dadurch gekennzeichnet, dass** jede der dreidimensionalen Hauptkameraeinheit und der dreidimensionalen Unterkamera eine Kamerarichtungs-Steuereinrichtung zum Einstellen eines Kameraschwenks für jede der rechten und linken zweidimensionalen Kameras und eine Neigungssteuereinrichtung zum Einstellen einer Neigung für jede der rechten und linken zweidimensionalen Kameras aufweist.

## Revendications

1. Capteur d'images multidirectionnel utilisant une pluralité de caméras de capture d'images, comprenant :
un moyen d'acquisition de données de condition principale de capture d'image (100) pour acquérir des données de condition principale de capture d'image représentant une condition de capture d'image pour une caméra principale (10) ; et
un moyen de génération (300) de sous-condition de capture d'image pour délivrer des données de sous-condition de capture d'image à une sous-caméra (11-14) et fournir les données de sous-condition de capture d'image à ladite sous-caméra pour établir une condition de capture d'image pour ladite sous-caméra, en correspondance avec la condition de capture d'image pour la caméra principale,
**caractérisé en ce que**
ledit moyen de génération (300) de sous-condition de capture d'image comprend un moyen formant mémoire pour pré-mémoriser lesdites données de sous-condition de capture d'image pour la correspondance avec une pluralité de réglages différents de ladite condition de capture d'image pour la caméra principale, lesdites données de sous-condition de capture d'image pré-mémorisées pouvant être lues dans ladite mémoire en fonction d'adresses de lecture qui lui sont fournies,
le capteur comprend un moyen de génération (200) d'adresse pour générer une dite adresse de lecture en fonction des données de condition principale de capture d'image provenant dudit moyen d'acquisition de données de condition principale de capture d'image, et une section d'opération (400) pouvant fonctionner dans une opération de préparation et de pré-mémorisation de données pour commander le moyen formant mémoire et la moyen de génération (200) d'adresse de façon à inscrire dans ledit moyen formant mémoire des données de sous-condition de capture d'image acquises qui sont utilisées dans ladite opération pour commander ladite sous-caméra, et qui correspondent à chacun des réglages de ladite pluralité de réglages de ladite condition de capture d'image pour la caméra principale, tel qu'utilisé dans ladite opération pour régler la caméra principale, les adresses d'écriture pour celle-ci étant générées par ledit moyen de génération (200) d'adresse en fonction des données de condition principale de capture d'image ; et
chacune desdites caméra principale (10) et sous-caméras (11-14) est une caméra tridimensionnelle et comprend :
des caméras bidimensionnelles droite et gauche (90R, 90L,) agencées à un intervalle de caméra préalablement déterminé ;
un moyen de commande de changement de focale (106R, 106L) pour commander un rapport de focale de chacune desdites caméras bidimensionnelles droite et gauche ;
un moyen de commande (124, 952) d'intervalle de caméra pour commander l'intervalle de caméra afin d'ajuster une position transversale des . axes optiques desdites caméras bidimensionnelles droite et gauche le long d'une direction avant-et-arrière, ledit moyen de commande d'intervalle de caméra comportant une mémoire ROM de conversion de données (4b) qui peut être changée selon les besoins, et convertissant les données de commande en des données de commande d'intervalle pour commander ledit intervalle de caméra, et
un moyen d'association de données (130) pour fournir lesdites données de commande audit moyen de commande d'intervalle de caméra en fonction de l'ajustement effectué par ledit moyen de commande de changement de focale.

2. Capteur selon la revendication 1, **caractérisé en ce que** les données de condition principale de capture d'image et les données de sous-condition de capture d'image comprennent des données représentant les rapports de focale établis respectivement pour ladite caméra principale (10) et pour ladite sous-caméra (11-14), et les directions desdites caméras.

3. Capteur selon la revendication 1, **caractérisé en ce que** lesdites données de condition principale de capture d'image et lesdites données de sous-condition de capture d'image comprennent au moins des données associées au changement de focale et des données associées à un angle de croisement des axes optiques desdites caméras droite et gauche pour obtenir une image stéréoscopique avec ladite caméra tridimensionnelle.

4. Capteur selon la revendication 1, **caractérisé en ce que** ledit moyen de commande (124, 952) d'intervalle de caméra a des caractéristiques représentant qu'une pente représentant des caractéristiques de changement d'intervalle de caméra est petite avant que le rapport de focale soit réglé à une valeur préalablement déterminée par ledit moyen de commande de changement de focale, et la pente augmente quand le rapport de focale dépasse l'angle préalablement déterminé.

5. Capteur selon la revendication 1, **caractérisé en ce que** chacune desdites unité de caméra principale tridimensionnelle et sous-caméra tridimensionnelle comprend un moyen de commande de direction de caméra pour ajuster un panoramique de chacune desdites caméras bidimensionnelles droite et gauche et un moyen de commande d'inclinaison pour ajuster une inclinaison de chacune desdites caméras bidimensionnelles droite et gauche.
